# EUROPEAN PATENT APPLICATION

(11) **EP 3 663 539 A1**
(43) Date of publication of application: **10.06.2020**
(21) Application number: 19208001.8
(22) Date of filing: 08.11.2019
(51) Int. Cl.: F01D 21/14, F01D 25/16, F01D 25/18, F02C 7/06, F02C 7/36

(54) **OIL SUPPLY ARRANGEEMT FOR AN EPICYCLIC GEARBOX IN A GAS TURBINE ENGINE**

(30) Priority: 05.12.2018 GB 201819843
(71) Applicant: Rolls-Royce plc, London N1 9FX (GB)
(72) Inventor: Hill, Matthew, Derby, Derbyshire DE24 8BJ (GB)
(74) Representative: Rolls-Royce plc

(57) **Abstract**

A gas turbine engine for an aircraft comprises a gearbox that receives an input from a core shaft and outputs drive to the fan so as to drive the fan at a lower rotational speed than the core shaft. The gearbox is an epicyclic gearbox comprising planet gears (32), each of which is rotatable about its own axis (300) on a respective pin (200), with a journal bearing (250) formed between each planet gear (32) and its respective pin (200). A first oil supply system is arranged to provide an oil supply to the journal bearing via a first journal bearing supply channel (214) formed through the pin. A second oil supply system is arranged to provide an oil supply to the journal bearing via a second journal bearing supply channel (224) formed through the pin, the second oil system being different to the first oil system. The second journal bearing supply channel is parallel to the first journal bearing supply channel. The second journal bearing supply channel is offset from the first journal bearing supply channel in the direction of the axes of the planet gears. This ensures that the fan is able to windmill efficiently and reliably in the event of an engine failure.

## Description

The present disclosure relates to a gearbox for a gas turbine engine. Aspects of the present disclosure relate to an oil system for providing lubrication to such a gearbox.

Modern gas turbine engines comprise a fan that is driven by a turbine. A portion of the flow that passes through the fan subsequently passes through a bypass duct of the engine to provide propulsive thrust. Such bypass flow does not pass through the core of the engine, including the combustor, and provides particularly efficient thrust.

In order to optimize the efficiency of such a gas turbine engine, it is desirable for the rotational speed of the fan to be lower than the rotational speed of the turbine that drives the fan. Accordingly, a reduction gearbox may be provided between the turbine and the fan in order to reduce the rotational speed of the fan relative to that of the turbine that drives the fan.

Such a gearbox comprises moving parts, such as gears, that must be lubricated during use, for example using oil. It is important to ensure that the fan is able to rotate during flight, even in the event of an engine failure. In this regard, if an engine fails (or is shut down for some reason) during flight, such that the fan is no longer being driven by the turbine, it should be allowed to "windmill", i.e. to be allowed to rotate as the air passes over it due to the forward motion of the aircraft. If the fan were prevented from windmilling, then it would produce significant levels of drag, which in turn would adversely impact the ability to control the aircraft.

Accordingly, it is necessary to ensure that the fan is not prevented from rotating (or windmilling) as a result of seizure of the gearbox through which it is driven in normal use. This requires an oil system that is both robust and efficient, because insufficient oil flow to certain parts of the gearbox may result in seizure.

According to a first aspect there is provided a gas turbine engine for an aircraft comprising:
an engine core comprising a turbine, a compressor, and a core shaft connecting the turbine to the compressor;
a fan located upstream of the engine core, the fan comprising a plurality of fan blades; and
a gearbox that receives an input from the core shaft and outputs drive to the fan so as to drive the fan at a lower rotational speed than the core shaft, wherein:
   the gearbox comprises an epicyclic gear train comprising a sun gear, a plurality of planet gears and a ring gear, each planet gears being rotatable about its own axis on a respective pin, with a journal bearing formed between each planet gear and its respective pin;
   a first oil supply system is arranged to provide an oil supply to the journal bearing via a first journal bearing supply channel formed through the pin;
   a second oil supply system is arranged to provide an oil supply to the journal bearing via a second journal bearing supply channel formed through the pin, the second oil system being different to the first oil system;
   the second journal bearing supply channel is parallel to the first journal bearing supply channel; and
   the second journal bearing supply channel is offset from the first journal bearing supply channel in the direction of the axis of the planet gears.

Such an arrangement provides a reliable and efficient oil flow to the journal bearing formed between the planet gears and their pins, thereby substantially eliminating the possibility of gearbox seizure during use. Providing parallel first and second journal bearing supply channels ensures that the oil is delivered to the journal bearing in the most effective manner regardless of whether it originates from the first oil supply system or the second oil supply system.

The second oil supply system being different to the first oil supply system may mean that failure of one of the oil systems does not affect operation of the other oil system.

The first oil supply system may not be able to supply oil to the second journal bearing supply channel. The first oil supply system may only be able to supply oil to the first journal bearing supply channel. The second oil supply system may not be able to supply oil to the first journal bearing supply channel. The second oil supply system may only be able to supply oil to the second journal bearing supply channel.

At least one (for example both) of the first journal bearing supply channel and the second journal bearing supply channel may be formed through its pin in the radial direction of the pin.

Each pin may have a passage running therethrough in the axial direction of the pin. Such a passage may be a central passage running through the pin's centre in the axial direction of the pin.

The first journal bearing supply channel may extend between the passage and the journal bearing so as to fluidly connect the passage (for example a part thereof) to the journal bearing, for example to supply oil to the journal bearing. The second journal bearing supply channel may extend between the passage and the journal bearing so as to fluidly connect the passage (for example a part thereof) to the journal bearing, for example to supply oil to the journal bearing.

The axial direction of the pin may be aligned with and/or collinear with the axial direction of the respective planet gear. The pin may be axisymmetric about its axis. The pin may not be rotatable about its axis (i.e. may not rotate about its axis in use).

The pin may be described as annular, for example having an annular cross-section in a plane perpendicular to its axis. The pin may be a hollow cylinder having an annular cross-section.

The first oil supply system may comprise a first central feed passage running through the central passage of each pin. The first journal bearing supply channel may extend between the first central feed passage and the journal bearing.

The second oil supply system may comprise a second central feed passage running through the central passage of each pin. The second journal bearing supply channel may extend between the second central feed passage and the journal bearing. In such an arrangement, the first central feed passage may not be fluidly coupled to the second central feed passage.

The first oil supply system may comprise a first pump arranged to pump oil around the first oil supply system. The second oil supply system may comprise a second pump arranged to pump oil around the second oil supply system. Such a second pump may be smaller (for example lower power and/or lower capacity) than the first pump.

Alternatively, the first oil supply system and the second oil supply system may share a pump.

The first and second journal bearing supply channels may be parallel in that they may lie in parallel planes. Such parallel planes may be perpendicular to the axis of the planet gear and/or the pin.

The first oil supply system may have greater capacity than the second oil supply system.

The capacity (for example in terms of oil capacity and/or pump size) of the second oil supply system may be less than the capacity of the first oil supply system, for example less than 80%, 70%, 60% or 50% of the capacity of the first oil supply system.

The second oil supply system may be arranged to provide sufficient oil (i.e. on its own) to the journal bearing to allow the fan to operate in a windmill condition in which it is not driven by the turbine. In such a condition, the fan may continue to rotate due to the aerodynamic forces imparted on the fan as it passes through the air, but no driving force may be provided by the driving (or power) turbine.

In some arrangements, the second oil supply system may be arranged such that it is only capable of delivering sufficient oil on its own to the journal bearing to allow the fan to operate for a limited period of time (or not at all) under normal operating conditions, in which the fan is driven by the turbine via the gearbox. Such a limited period of time may be, for example, 30 minutes, 20 minutes, 10 minutes or 5 minutes. Such operation may only be possible if the engine is operating under idle conditions. In some arrangements, the second oil supply system may be arranged such that it is not capable of delivering sufficient oil on its own to the journal bearing to allow the fan to operate under normal operating conditions, in which the fan is driven by the turbine via the gearbox.

During normal operation, in which the fan is driven by the turbine via the gearbox, oil may be provided to the journal bearings by both the first oil supply system and the second oil supply system. Alternatively, during normal operation, in which the fan is driven by the turbine via the gearbox, oil may be provided to the journal bearings by only the first oil supply system.

The first oil supply system may comprise at least two first journal bearing supply channels formed through each pin. In such an arrangement, each first journal supply channel may be parallel to the others and/or offset from the others in the direction of the axis of the planet gears.

The second oil supply system may comprise at least two second journal bearing supply channels formed through the pin, each second journal supply channel being parallel to the others and offset from the others in the direction of the axis of the planet gears.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4, for example on the order of or at least 3, 3.1, 3.2, 3.3, 3.4, 3.5, 3.6, 3.7, 3.8, 3.9 or 4. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg s, 90 Nkg⁻¹s, 85 Nkg s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a schematic showing an oil system in accordance with an example of the present disclosure;
Figure 5 is a schematic showing an oil system in accordance with an example of the present disclosure;
Figure 6 shows an example of an oil system and journal bearing in accordance with an example of the present disclosure; and
Figure 7 shows an example of an oil system and journal bearing in accordance with an example of the present disclosure.

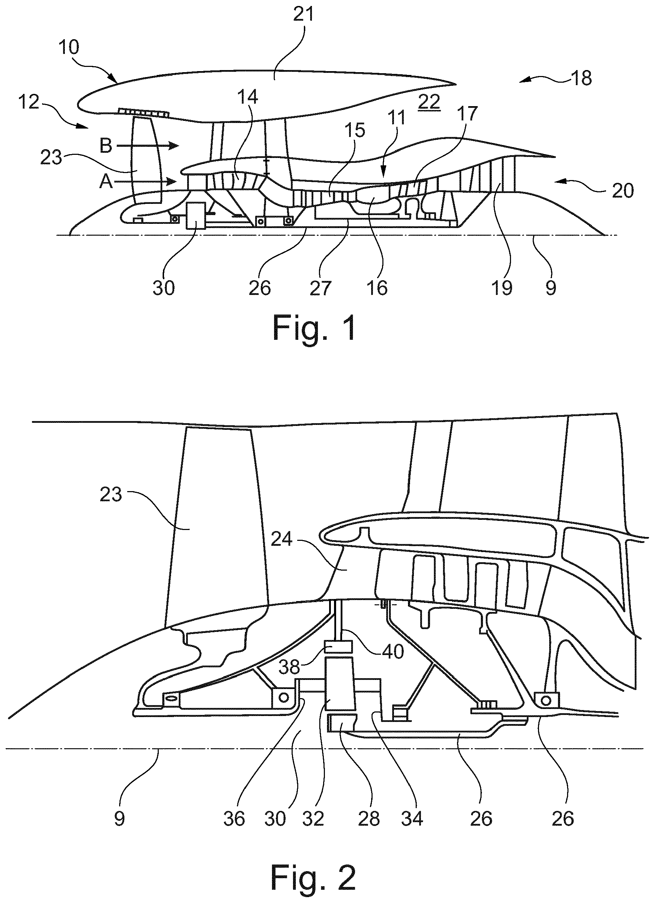

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

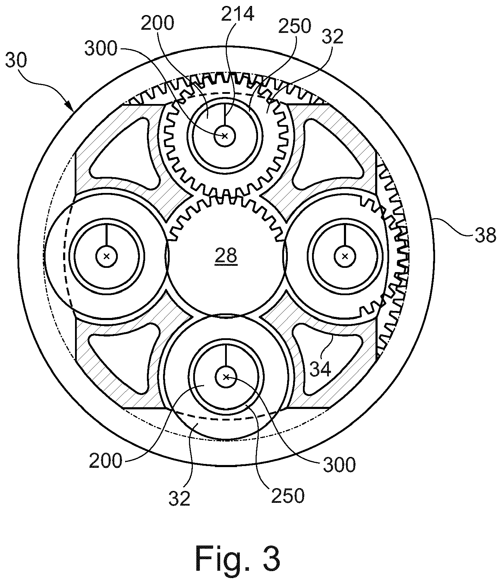

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

As shown in Figure 3, each of the planet gears 32 rotates on (and relative to) a pin 200, about an axis 300. The pin 200 may remain fixed (or stationary) during operation relative to the planet carrier 34. In some arrangements, the pin 200 may remain stationary in absolute terms, whereas in other arrangements the pin 200 may rotate with the planet carrier 34 around the centreline of the gearbox 30. A journal bearing 250 is formed between the pin 200 and respective planet gear 32. The journal bearing may be said to be formed between a radially outer surface (for example a cylindrical radially outer surface) of the pin 200 and a radially inner surface (for example a cylindrical radially inner surface) of the respective planet gear 32. As explained in greater detail below, oil is supplied to the journal bearing 250 during operation.

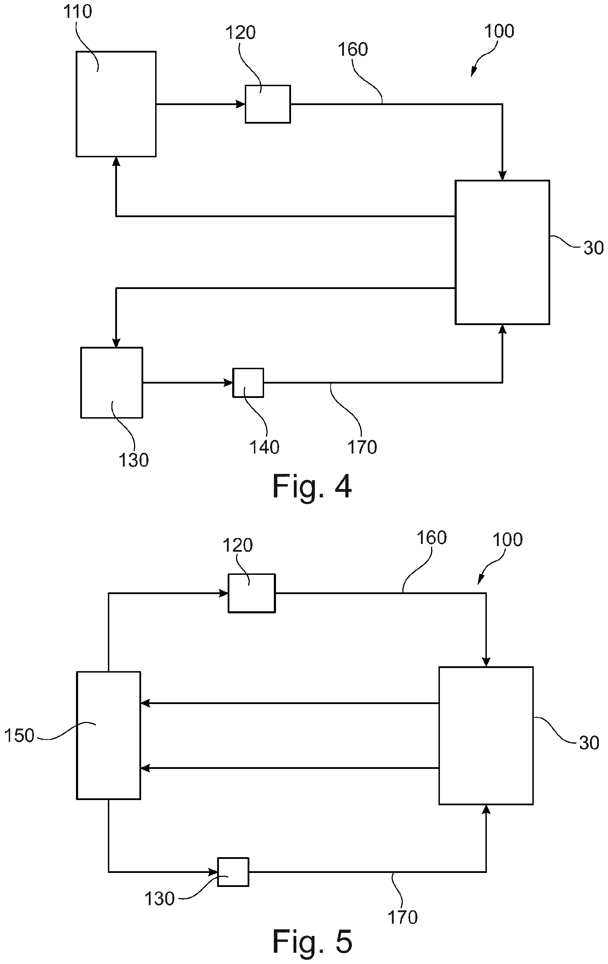

An example of an oil system 100 for supplying oil to the journal bearing is shown in Figure 4. The oil system 100 comprises a first oil supply system 160 and a second oil supply system 170. The oil in the first oil supply system 160 may be separate from the oil in the second oil supply system 170, as in the Figure 4 example.

The first oil supply system 160 comprises a pump 120 and an oil reservoir 110, which may be an oil tank 110. The pump 120 is arranged to be able to pump oil around the first oil supply system 160, so as to be able to supply oil to the gearbox 30 in use. In use, oil may flow in the direction of the arrows in Figure 4, that is from the reservoir 110 through the pump 120, to the gearbox 30 and then back to the reservoir 110.

The second oil supply system 170 comprises a pump 140 and an oil reservoir 130. The pump 140 is arranged to be able to pump oil around the first oil supply system 170, so as to be able to supply oil to the gearbox 30 in use. In use, oil may flow in the direction of the arrows in Figure 4, that is from the reservoir 130 through the pump 140, to the gearbox 30 and then back to the reservoir 130.

The first and/or second oil supply system 160/170 may comprise other components, such as one or more filters, as desired in order to ensure effective and reliable operation. Purely by way of example, a filter may be provided on the oil return path between the gearbox 30 and the respective reservoir 110/130.

As shown schematically in the Figure 4 example, the first oil supply system 160 may be larger (for example in terms of total capacity and/or reservoir capacity and/or pump size) than the second oil supply system 170.

During normal operation - in which the fan 23 is driven by the low pressure turbine 19 via the gearbox 30 - oil may be supplied to the gearbox 30 using just the first oil supply system 160. Alternatively, during normal operation - in which the fan 23 is driven by the low pressure turbine 19 via the gearbox 30 - oil may be supplied to the gearbox 30 using both the first oil supply system 160 and the second oil supply system 170.

Figure 5 shows an alternative oil supply arrangement. The Figure 5 arrangement also comprises a first oil supply system 160 and a second oil supply system 170. However, in contrast to the Figure 4 arrangement, the first oil supply system 160 and the second oil supply system 170 share a common oil reservoir 150 in the Figure 5 arrangement. It will be appreciated that arrangements other than those illustrated by way of example in Figures 4 and 5 are within the scope of the present disclosure, for example arrangements in which the first oil supply system 160 and the second oil supply system 170 share a common pump.

Each of the first oil supply system 160 and the second oil supply system 170 is capable of providing sufficient lubrication to the journal bearings 250 in the gearbox 30 on its own at least during windmilling of the fan 23 (i.e. when the fan 23 is not being driven by the turbine 19). Thus, in the event of failure of one of the oil supply systems 160, 170, the other oil supply system 160, 170 can be used alone in order to allow the fan 23 to continue windmilling without seizure of the gearbox 30 due to oil starvation of the journal bearings 250. For example, the engine 10 may be shut down (such that no fuel is burned in the combustor 16), whilst allowing the fan 23 to continue to rotate due to the aerodynamic forces exerted thereon as it moves through the air through lubrication provided by just one of the first oil supply system 160 and the second oil supply system 170.

In some arrangements, one or both of the first oil supply system 160 and the second oil supply system 170 may not be capable of providing sufficient lubrication to the journal bearings 250 in the gearbox 30 on its own during normal operation of the fan 23.

If required, a switch may be used (for example an electrical switch or a mechanical (including pneumatic and/or hydraulic) switch) to determine which one or both of the first oil supply system 160 and the second oil supply system 170 is operational at a given time. Such a switch may be in a different state, for example, when the engine 10 is operating normally compared to when then engine 10 is windmilling.

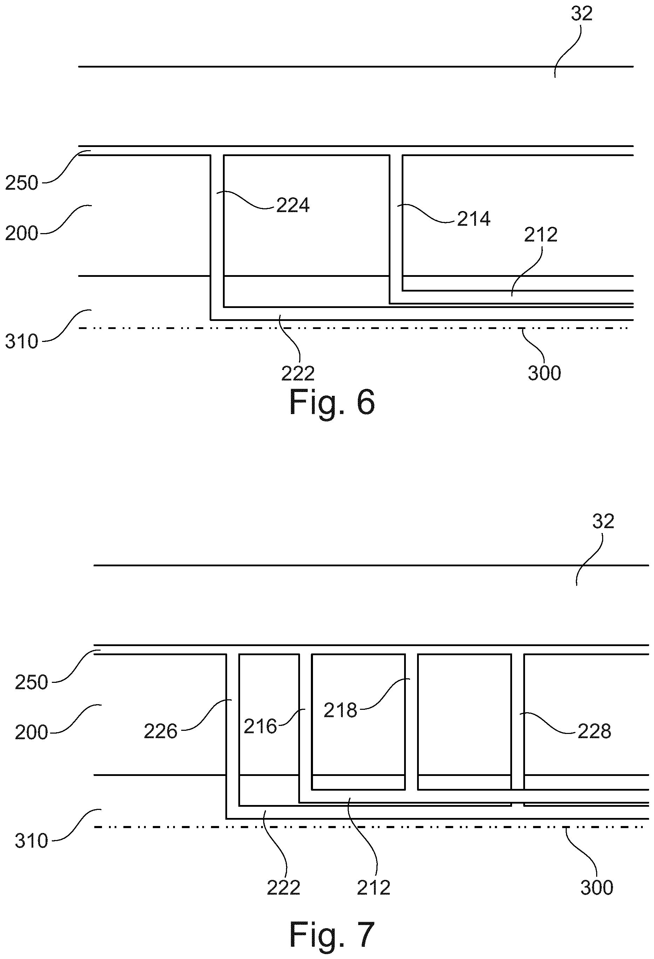

Figure 6 shows a close-up view of the delivery of oil to the journal bearing 250 using the first oil supply system 160 and the second oil supply system 170. The first oil supply system 160 comprises a first journal bearing supply channel 214. The first journal bearing supply channel 214 is in fluid connection with the journal bearing 250. Accordingly, in use, the first journal bearing supply channel 214 can supply oil to the journal bearing 250. The first journal bearing supply channel 214 passes through the pin 200. The first journal bearing supply channel 214 passes from a radially inner surface of the pin 200 to a radially outer surface of the pin 200. In the Figure 6 example, the first journal bearing supply channel 214 is fed from a channel (which may be a cylindrical channel) 310 through the centre of the pin 200. In the Figure 6 example, the first journal bearing supply channel 214 is fed via a first central feed passage 212 running through the channel 310 through the centre of the pin.

The second oil supply system 170 comprises a second journal bearing supply channel 224. The second journal bearing supply channel 224 is in fluid connection with the journal bearing 250. Accordingly, in use, the second journal bearing supply channel 224 can supply oil to the journal bearing 250. The second journal bearing supply channel 224 passes through the pin 200. The second journal bearing supply channel 224 passes from a radially inner surface of the pin 200 to a radially outer surface of the pin 200. In the Figure 6 example, the second journal bearing supply channel 224 is fed from a channel (which may be a cylindrical channel) 310 through the centre of the pin 200. In the Figure 6 example, the second journal bearing supply channel 224 is fed via a first central feed passage 222 running through the channel 310 through the centre of the pin.

In order to optimize the efficiency and/or effectiveness of the oil supplied to the journal bearing 250 during operation, the first journal bearing supply channel 214 is parallel to the second journal bearing supply channel 224. Thus, regardless of whether one or both of the first and second oil system systems 160, 170 is in operation, oil can be supplied to the journal bearing efficiently and effectively.

In the arrangement shown in Figure 6, the first journal bearing supply channel 214 and the second journal bearing supply channel 224 both lie in respective planes that are perpendicular to the central axis 300 about which the planet gears 32 are rotatable. The central axis 300 is parallel to the central axis 9 of the gas turbine engine 10, and so the first journal bearing supply channel 214 and the second journal bearing supply channel 224 may be said to both lie in respective planes that are perpendicular to the engine axis 9.

As illustrated in Figure 6, the first journal bearing supply channel 214 and the second journal bearing supply channel 224 are axially offset from each other. Thus, there is an axial gap (in the direction of the planet gear axis 300 and/or the engine axis 10) between the first journal bearing supply channel 214 and the second journal bearing supply channel 224.

Figure 7 shows an alternative arrangement for the delivery of oil to the journal bearing 250 using the first oil supply system 160 and the second oil supply system 170. All compatible aspects and features described in relation to the Figure 6 arrangement may also be applied to the Figure 7 arrangement. The Figure 7 arrangement is substantially the same as the Figure 6 arrangement, other than in that the first oil supply system 160 comprises two first journal bearing supply channels 216, 218 and the second oil supply system 170 comprises two second journal bearing supply channels 226, 228. Again, in order to optimize the efficiency and/or effectiveness of the oil supplied to the journal bearing 250 during operation, the first journal bearing supply channels 216, 218 are parallel to the second journal bearing supply channels 226, 228. In the Figure 7 arrangement, the first journal bearing supply channels 216, 218 are also parallel to each other, and the second journal bearing supply channels 226, 228 are also parallel to each other. However, it will be appreciated that it may not be necessary for all of the channels to be parallel to each other. For example, one first journal bearing supply channel 216 may be parallel to one second journal bearing supply channel 226, but not parallel to the other first journal bearing supply channel 218.

It will be appreciated that oil may be provided into the gearbox 30 (for example into the central channel 300 of the pins 200) and extracted from the gearbox 30 (for example after being used to lubricate the journal bearings 250) from the first and second oil supply systems 160, 170 using suitable couplings and/or scavenge arrangements.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft, wherein:
the gearbox comprises an epicyclic gear train comprising a sun gear (28), a plurality of planet gears (32) and a ring gear (38), each planet gear being rotatable about its own axis (300) on a respective pin (200), with a journal bearing (250) formed between each planet gear (32) and its respective pin (200);
a first oil supply system (160) is arranged to provide an oil supply to the journal bearing via a first journal bearing supply channel (214) formed through the pin;
a second oil supply system (170) is arranged to provide an oil supply to the journal bearing via a second journal bearing supply channel (224) formed through the pin, the second oil system being different to the first oil system;
the second journal bearing supply channel is parallel to the first journal bearing supply channel; and
the second journal bearing supply channel is offset from the first journal bearing supply channel in the direction of the axes of the planet gears.

2. A gas turbine engine (10) according to claim 1, wherein at least one of the first journal bearing supply channel and the second journal bearing supply channel is formed through its pin in the radial direction of the pin.

3. A gas turbine engine (10) according to claim 1 or claim 2, wherein both the first journal bearing supply channel and the second journal bearing supply channel are formed through their pin in the radial direction of the pin.

4. A gas turbine engine (10) according to any one of the preceding claims, wherein:
each pin has a passage running therethrough in the axial direction of the pin; and
the first journal bearing supply channel and the second journal bearing supply channel extend between the passage and the journal bearing so as to fluidly connect the passage to the journal bearing.

5. A gas turbine engine (10) according to claim 4, wherein:
the first oil supply system comprises a first central feed passage running through the central passage of each pin, the first journal bearing supply channel extending between the first central feed passage and the journal bearing;
the second oil supply system comprises a second central feed passage running through the central passage of each pin, the second journal bearing supply channel extending between the second central feed passage and the journal bearing; and
the first central feed passage is not fluidly coupled to the second central feed passage.

6. A gas turbine engine (10) according to any one of the preceding claims, wherein:
the first oil supply system comprises a first pump arranged to pump oil around the first oil supply system; and
the second oil supply system comprises a second pump arranged to pump oil around the second oil supply system.

7. A gas turbine engine according to claim 6, wherein the second pump is a lower power and/or lower capacity pump than the first pump.

8. A gas turbine engine according to any one of the preceding claims, wherein the first oil supply system has greater capacity than the second oil supply system.

9. A gas turbine engine according to any one of the preceding claims, wherein the capacity of the second oil supply system is less than 70% of the capacity of the first oil supply system.

10. A gas turbine engine according to any one of the preceding claims, wherein the second oil supply system is arranged to provide sufficient oil to the journal bearing to allow the fan to operate in a windmill condition in which it is not driven by the turbine.

11. A gas turbine engine according to any one of the preceding claims, wherein during normal operation, in which the fan is driven by the turbine via the gearbox, oil is provided to the journal bearings by both the first oil supply system and the second oil supply system.

12. A gas turbine engine according to any one of claims 1 to 10, wherein during normal operation, in which the fan is driven by the turbine via the gearbox, oil is provided to the journal bearings by only the first oil supply system.

13. A gas turbine engine according to any one of the preceding claims, wherein:
the first oil supply system comprises at least two first journal bearing supply channels formed through the pin, each first journal supply channel being parallel to the others and offset from the others in the direction of the axis of the planet gears; and/or
the second oil supply system comprises at least two second journal bearing supply channels formed through the pin, each second journal supply channel being parallel to the others and offset from the others in the direction of the axis of the planet gears.

14. A gas turbine engine according to any one of the preceding claims, wherein the diameter of the fan is in the range of from 220cm to 400cm, optionally 220 cm to 290cm or 320cm to 400cm.

15. The gas turbine engine according to any one of the preceding claims, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.
